**Europäisches Patentamt**

**European Patent Office**

**Office européen des brevets**

(19)

(11) Veröffentlichungsnummer: **0 255 022**
**B1**

(12) # EUROPÄISCHE PATENTSCHRIFT

(45) Veröffentlichungstag der Patentschrift:
**07.03.90**

(51) Int. Cl.⁴: **B01D 53/34**

(21) Anmeldenummer: **87110540.9**

(22) Anmeldetag: **21.07.87**

(54) **Verfahren zur Entfernung von Halogencyanen und Phosgen aus Abgasen.**

(30) Priorität: **26.07.86 DE 3625378**

(43) Veröffentlichungstag der Anmeldung:
**03.02.88 Patentblatt 88/5**

(45) Bekanntmachung des Hinweises auf die Patenterteilung:
**07.03.90 Patentblatt 90/10**

(84) Benannte Vertragsstaaten:
**AT BE CH DE ES FR GB IT LI NL SE**

(56) Entgegenhaltungen:
**DE-B- 1 934 856**
**FR-A- 2 317 959**
**US-A- 4 493 818**

(73) Patentinhaber: **HOECHST AKTIENGESELLSCHAFT,
Postfach 80 03 20, D-6230 Frankfurt am Main 80(DE)**

(72) Erfinder: **Bicker, Richard, Dr., Brunnenstrasse 40,
D-6237 Liederbach(DE)**
Erfinder: **Schrod, Manfred, Dr.,
Gross-Gerauer-Strasse 54D, D-6108 Weiterstadt(DE)**
Erfinder: **Militzer, Hans, Dr., Adolf-Kolping-Strasse 6,
D-6238 Hofheim am Tanus(DE)**

## Beschreibung

Phosgen wird wegen seiner hohen chemischen Reaktivität in großen Mengen produziert und vorwiegend mit Aminen zu Isocyanaten umgesetzt. Isocyanate sind wertvolle Zwischenprodukte für die Herstellung von Polyurethanen, z.B. Farben, Lacken, Klebstoffen, Arzneimitteln und Pflanzenschutzmitteln. Phosgen ist daher trotz seiner Giftigkeit in der chemischen Industrie ein unentbehrlicher Rohstoff.

Wenn der Giftigkeit sind die Phosgen-Emissionen so gering wie möglich zu halten, was auch in entsprechenden staatlichen Verordnungen (z.B. Technische Anleitung zur Reinhaltung der Luft - TA Luft) seinen Ausdruck findet. Gewöhnlich werden phosgenhaltige Abgase mit Natronlauge chemisch gewaschen, wobei Wäscher verschiedenster Typen verwendet werden. Dabei besteht ein Problem darin, die Phosgenkonzentration im Gasstrom durch die Wäsche auf sehr niedrige Werte abzusenken, wozu bisher großdimensionierte Wäscher notwendig sind, da die Voraussetzungen für eine effektive Wäsche - schnelle chemische Reaktion und guter Stoffaustausch zwischen der gasförmigen und flüssigen Phase - bisher nicht in optimaler Weise erfüllt werden können.

Auch Halogencyane sind chemisch sehr reaktive Verbindungen, die z.B. zur Aktivierung von polymeren Trägern zur Fixierung von Enzymen (US-A 3,645,852; US-A 3,876,501; US-A 3,935,072) bzw. zur chemischen Bindung von Antikörpern bei der Affinitätschromatographie und, da biochemische Verfahren immer größere Bedeutung erlangen, z.B. bei der Herstellung von Enzymen, Hefen, Arzneimitteln, Aminosäuren, Citronensäure u.a. in zunehmendem Maße eingesetzt werden. Ebenso gelangen sie bei der spezifischen Spaltung von Peptiden und Proteinen an Methionin zum Einsatz, um gezielt lange Peptidketten in Bruchstücke zu zerlegen (s. E. Gross u. B. Wittkopp, J.Amer.Chem.Soc. <u>83</u>, 1510 (1961), EP-A 134 070).

Chlorcyan ist ein Folgeprodukt der Acrylnitril-Produktion und wird in großen Mengen aus Blausäure und Chlor gewonnen, wobei es meist direkt zu Cyanurchlorid umgesetzt wird. Cyanurchlorid ist ein Ausgangsprodukt für u.a. Melaminharze und Herbizide auf Basis von Triazinen.

Auch bei den oben genannten Halogencyaniden handelt es sich wie bei Phosgen um sehr toxische Verbindungen; belastete Gasstrome sind daher sehr gründlich zu waschen. Bromcyan und vor allem Chlorcyan reagieren mit NaOH deutlich langsamer als Phosgen, so daß Gaswäscher mit NaOH noch weniger wirksam sind als für Phosgen. Mit anderen Worten sind die entsprechenden Wäscher noch größer zu dimensionieren als bei Phosgen, um sehr niedrige Endkonzentrationen im Abgas zu erhalten.

Bei kleinen Gasströmen verwendet man gewöhnlich Füllkörperkolonnen, die aber einen hohen Druckverlust bewirken, so daß man bei hohen Gasmengen Strahlwäscher verwendet.

Prinzipiell ist in den vorgenannten Wäschertypen zwar eine nahezu vollständige Umsetzung der genannten toxischen Gase und Dämpfe möglich; die verwendeten Apparate müssen aber sehr groß dimensioniert werden. Jedoch läßt sich der Abscheidegrad für ein Gas außer durch technische Dimensionierung des Wäschers, d.h. hinsichtlich der Ausmaße, bzw. durch Verwendung von Füllkörpern prinzipiell auch durch Verwendung einer anderen Waschflüssigkeit erhöhen.

Ein geeignetes Absorptionsmittel sollte eine Anzahl von Anforderungen erfüllen, nämlich eine höhere chemische Reaktivität als Alkalihydroxyd, gute Stoffübergangseigenschaften, einen niedrigen Dampfdruck und möglichst geringen Eigengeruch haben sowie mit Wasser mischbar, vorzugsweise darin gut löslich und relativ gut zugänglich sein.

Absorptionsmittel, welche diese Anforderungen jedenfalls teilweise erfüllen, sind z.B. wäßrig-alkalische Lösungen bestimmter tertiärer Aminverbindungen (Trimethylamin, Triäthylamin, Pyridin, etc.; vgl. US-A 4 493 818); in einem Vergleichsbeispiel ist in diesem US-Patent u.a. auch eine wäßrig-alkalische Lösung von Äthylendiamin beschrieben.

Nach US-A 3 856 921 werden zur Entfernung saurer Gase in Abgasen wäßrig-alkalische Lösungen wieder anderer Amine, nämlich von 2-Methylaminoäthanol, 2-Äthylaminoäthanol, Morpholin und Pyrrolidin, verwendet.

Es wurde nun gefunden, daß Amine der Formel $NR_3$, in der einer der Reste R eine Alkanol-Gruppe mit 2 oder 3 C-Atomen darstellt, deren Hydroxylgruppe vorzugsweise endständig ist und die restlichen Gruppen R Alkyl mit 1 bis 4, vorzugsweise 1 bis 2 C-Atomen sind, die oben genannten Anforderungen in hohem Maße erfüllen, und zwar weit besser als Ammoniak und anorganische Basen, die diesbezüglich bekannten Amine oder auch andere Amine wie Triäthanolamin. Dies ergibt sich aus folgender Tabelle 1, wobei sich die Prozentangaben der Basen auf wäßrige Lösungen und die relativen Abscheidegrade AG auf 10%ige Lösungen von Diäthylaminoäthanol beziehen und der relative Abscheidegrad als

$$\frac{c_{\text{Eingang}} - c_{\text{Ausgang}}}{c_{\text{Eingang}}} \times 100$$

definiert ist.

Tabelle 1:
Relative Abscheidegrade (AG) in % für ClCN bei 25°C für verschiedene Basen als Waschflüssigkeit

| Base: | Vergleich | | | | Erfindung |
| --- | --- | --- | --- | --- | --- |
| | NaOH (20%) | NH₃ (25%) | Triäthanolamin (10%) | Diäthanolamin (10%) | Diäthylaminoäthanol (10%) |
| AG | 1 | 20 | 2 | 60 | 100 |

Die Verwendung der erfindungsgemäß verwendeten Amine als Waschflüssigkeit für die Abgaswäsche von z.B. COCl$_2$- und ClCN-haltigen Abgasen stellt gegenüber dem bekannten Stand der Technik einen erheblichen Fortschritt dar, vor allem auch deshalb, weil die Umwelt dadurch entlastet wird. Mit diesen Aminen werden in jedem Fall unter gleichen Bedingungen wesentlich höhere Abscheidegrade als bei reiner Natronlauge gefunden. Dies ist einerseits auf die wesentlich höhere chemische Reaktivität zurückzuführen, wie es aus Tabelle 2 anhand der Geschwindigkeitskonstante hervorgeht. Für z.B. ClCN ergibt sich eine Erhöhung der Geschwindigkeitskonstanten um 2 Größenordnungen.

Tabelle 2:
Geschwindigkeitskonstante für ClCN bei 20°C

| NaOH | $2 \, (s^{-1})$ |
| --- | --- |
| Dimethylaminoäthanol (Dimethol) | $130 \, (s^{-1})$ |
| Diäthylaminoäthanol (Diäthol) | $60 \, (s^{-1})$ |

Die erfindungsgemäß verwendeten Amine sind im allgemeinen in der Waschflüssigkeit in einer Konzentration von etwa 2 bis 20, vorzugsweise etwa 5 bis 15 Gew.-% enthalten. Sie können auch in Kombination mit Alkalihydroxyden, insbesondere NaOH, eingesetzt werden. Dabei ist das Alkalihydroxyd im allgemeinen in einer Konzentration bis zu etwa 25, vorzugsweise von etwa 5 bis 20 Gew.-% zugegen. Dies hat den Vorteil, daß die erfindungsgemäß eingesetzten Amine durch die Alkalien nach der Reaktion mit dem Halogencyan bzw. Phosgen wieder regeneriert werden.

Bei dem erfindungsgemäßen Verfahren wird das phosgen- bzw. halogencyanhaltige Abgas in einer geeigneten Absorptionsapparatur mit dem Absorptionsmittel in Kontakt gebracht, zweckmäßig bei einer Temperatur von etwa 0 bis 80, vorzugsweise von etwa 5 bis 40°C. Dabei gehen die genannten halogenhaltigen Schadstoffe in die flüssige Phase über und werden dort chemisch umgesetzt.

Das erfindungsgemäße Verfahren läßt sich verfahrenstechnisch in verschiedenartigster Weise gestalten. Es ist bevorzugt, Gas und Waschflüssigkeit im Gegenstrom zu führen. Entscheidend ist, daß Waschflüssigkeit und Gas in innigen Kontakt gebracht werden, daß also beide mit einer großen Oberfläche miteinander in Berührung kommen, damit der Stoffaustausch dieser Zweiphasenreaktion gut vonstatten geht.

Geeignete Ausführungsformen sind in der Technik hinreichend bekannt, wie Füllkörper- oder Bodenkolonnen, z.B. mit Glockenböden, oder Wasserringpumpen. Eine Ausführungsform, bei der Gas und Flüssigkeit nicht im Gegenstrom geführt werden, besteht darin, das Verfahren in einem Strahlapparat auszuführen, bei dem also Gas und Flüssigkeit nach Art einer Wasserstrahlpumpe versprüht werden. Welches verfahrenstechnische Prinzip man in der Praxis anwendet, hängt von dem Volumen des Gasstroms und des Waschmittels sowie den Dimensionen bereits vorhandener Apparate und der damit erzeugten Stoffaustauschfläche ab. Das Absorptionsmittel kann sowohl im Umpump- als auch im kontinuierlichen Durchlauf verwendet werden. Dabei ist auch zu berücksichtigen, daß durch die erfindungsgemäß verwendeten Amine die Oberflächenspannung der Waschflüssigkeit vermindert und dadurch die effektive Stoffaustauschfläche vergrößert wird. Dies wirkt sich positiv auf den Abscheidegrad aus.

In den nachfolgenden Beispielen wurden die Messungen in einem Strahlwäscher und einem Sprudelabsorber durchgeführt. Die Temperatur in der Waschflüssigkeit betrug 20°C. Die Ergebnisse sind in den Tabellen 4 bis 8 wiedergegeben, in denen bedeutet

V$_G$ Gasdurchsatz (m³/h)

V$_L$ Flüssigkeitsdurchsatz (1/h)

t Gasverweilzeit im Wäscher (s)

C Gew.-% der Base in Wasser (%)

Für Dimethol und Diäthol sind in Tabelle 3 einige relevante Stoffdaten zusammengefaßt.

Tabelle 3: Stoffdaten

|  | Dimethol | Diäthol |
|---|---|---|
| Molgewicht | 89,4 | 117,2 |
| Gehalt | über 99% | über 99% |
| $H_2O$-Gehalt | max. 5% | max. 5% |
| Sdp. (1,013 bar) | 134,6°C | 162,1°C |
| Schmelzpunkt | unter −70°C | −70°C |
| Dichte | 0,887 (g/ml) | 0,885 (g/ml) |
| Dampfdruck (20°C) | 6,13 mbar | 1,87 mbar |
| Viskosität (25°C) | ca. 3,5 mPa.s | ca. 4,3 mPa.s |
| Oberflächenspannung (24,5°C) | 27,1 (mN/m) |  |

Beispiele

1) In einem Strahlwäscher wird der Abscheidegrad für ClCN in Abhängigkeit von der Verweilzeit für verschiedene Waschflüssigkeiten gemessen. Die Diffusorlänge betrug 800 mm. Die Ergebnisse sind in Tabelle 4 zusammengefaßt.

Tabelle 4: Absorption von Chlorcyan mit verschiedenen Absorptionsmitteln ($V_L$ = 50 l/h)

|  | Abscheidegrad AG [%] | | | |
|---|---|---|---|---|
| Gasverweilzeit t [s] → | 0,1 | 0,22 | 0,63 | 1,48 |
| Waschmedium |  |  |  |  |
| NaOH − 10% (Vergleich) | 14,3 | 31,4 | 56,4 | 82,1 |
| $NH_3$ − 9% (Vergleich) | 33,5 | 51,4 | 73,6 | 90,0 |
| Äthanolamin 10% (Vergleich) | 36,8 | 60,7 | 83,6 | 95,7 |
| Diäthol 10% (Erfindung) | 40,0 | 62,8 | 86,4 | 98,6 |
| Dimethol 10% (Erfindung) | 50,3 | 74,3 | 91,4 | 98,6 |

2) Es wurde wie im Beispiel 1, jedoch stets in 10 %iger Konzentration und mit einem anderen Strahlwäscher mit der Diffusorlänge 270 mm, gearbeitet. Ergebnisse siehe Tabelle 5.

Tabelle 5: Absorption von ClCN mit verschiedenen Absorptionsmitteln ($V_L$ = 50 l/h)

|  | Abscheidegrad AG [%] | | | |
|---|---|---|---|---|
| Gasverweilzeit t [s] → | 0,05 | 0,1 | 0,22 | 0,5 |
| Waschmedium |  |  |  |  |
| NaOH (Vergleich) | 17,8 | 30,7 | 50,7 | 73,9 |
| Äthanolamin (Vergleich) | 37,8 | 56,4 | 73,6 | 91,4 |
| Dimethol (Erfindung) | 50,0 | 70,0 | 85,7 | 96,4 |

3) Es wurde die Abhängigkeit des Abscheidegrades für ClCN von der Diätholkonzentration bei kurzen Verweilzeiten (t= 0,22 s) in einem Strahlwäscher gemessen. Die Diffusorlänge betrug 800 mm. Ergebnisse siehe Tabelle 6

Tabelle 6: Absorption von Chlorcyan in Abhängigkeit von der Diäthol-Konzentration ($V_L$ = 50 l/h)

| Abscheidegrad AG (%) | 45 | 60 | 62,5 | 69,1 |
|---|---|---|---|---|
| Diäthol-Konzentration [Gew.-%] | 1,25 | 5,9 | 10 | 20 |

4) Es wurde die Abhängigkeit des Abscheidegrades für Phosgen in verschiedenen Absorptionsmitteln in 10 %iger Konzentration in Wasser in Strahlwäschern mit verschiedenen Diffusoren gemessen.

Ergebnisse siehe Tabelle 7.

Tabelle 7: Phosgen-Absorption in verschiedenen Absorptionsmitteln ($V_L$ = 50 l/h; $V_G$ = 2 m³/h)

| Waschmedium | Abscheidegrad [%] Diffusorlänge | |
|---|---|---|
| | 270 [mm] | 800 [mm] |
| NaOH (Vergleich) | 47,9 | 59,7 |
| Diäthol (Erfindung) | | 60,0 |
| Dimethol (Erfindung) | 61,6 | 74,7 |
| Äthanolamin (Vergleich) | 48,9 | 60,5 |

5) Es wurde die Abhängigkeit des relativen Abscheidegrades für ClCN von verschiedenen Waschflüssigkeit bei 25°C bestimmt, bezogen auf 100 %iges Diäthol. Die Messung wurde in einem Sprudelabsorber durchgeführt und auf 20 %ige NaOH bezogen. Die Ergebnisse sind in Tabelle 8 wiedergegeben. Äthanolamin und Äthylendiamin scheiden wegen des auftretenden Geruches als Waschflüssigkeit trotz ihres guten Abscheidegrades aus.

Tabelle 8: ClCN-Absorption (relativ) in verschiedenen Waschflüssigkeiten bei 25°C in einem Sprudeladsorber

| relativer Abscheide-grad [%] | 1,0 | 90,0 | 99,0 | 100 | 99,6 | 99,6 |
|---|---|---|---|---|---|---|
| | Vergleich | | Erfindung | | Vergleich | |
| Waschflüssigkeit [%] | NaOH 20 | NH₃ 25 | Diäthol 10 | Diäthol 100 | Äthanol-amin 10 | Äthylen-diamin 10 |

6) In einem Strahlwäscher wurde der Abscheidegrad für BrCN bestimmt. Dabei wurde ein Gasvolumen $V_{Gas}$ = 1,5 m³/h $N_2$ mit 5000 ppm BrCN mit einem Flüssigkeitsstrom $V_L$ = 40 l/h gewaschen. Mit 10 %iger NaOH wurde ein Abscheidegrad von 77 % erhalten und mit einer 10 %igen wäßrigen Dimethollösung ein Abscheidegrad von 91 %.

**Patentansprüche**

1. Verfahren zur Entfernung von Halogencyanen und/oder Phosgen aus Abgasen durch Wäsche mit wäßrigen Lösungen von Basen, dadurch gekennzeichnet, daß man das das Halogencyan und/oder Phosgen enthaltende Abgas in innigen Kontakt mit einer Waschflüssigkeit bringt, die als wirksamen Bestandteil ein Amin der Formel $NR_3$ enthält, worin einer der Reste R eine Alkanol-Gruppe mit 2 oder 3 C-Atomen darstellt und die restlichen Gruppen R Alkyl mit 1 bis 4 C-Atomen sind.

2. Verfahren nach Anspruch 1, dadurch gekennzeichnet, daß die Alkylreste R 1 bis 2 C-Atome enthalten.

3. Verfahren nach Anspruch 1 oder 2, dadurch gekennzeichnet, daß die Hydroxylgruppe in der Alkanolgruppe endständig ist.

4. Verfahren nach einem oder mehreren der Ansprüche 1 bis 3, dadurch gekennzeichnet, daß die Wäsche bei einer Temperatur von etwa 0 bis 80, vorzugsweise etwa 5 bis 40°C durchgeführt wird.

5. Verfahren nach einem oder mehreren der Ansprüche 1 bis 4, dadurch gekennzeichnet, daß das Gas und die Waschflüssigkeit im Gegenstrom zueinander geführt werden.

6. Verfahren nach einem oder mehreren der Ansprüche 1 bis 5, dadurch gekennzeichnet, daß das Amin in der Waschflüssigkeit in einer Konzentration von etwa 2 bis 20, vorzugsweise etwa 5 bis 15% enthalten ist.

7. Verfahren nach einem oder mehreren der Ansprüche 1 bis 6, dadurch gekennzeichnet, daß die Waschflüssigkeit noch zusätzlich ein Alkalihydroxid, insbesondere Natriumhydroxyd enthält.

8. Verfahren nach Anspruch 7, dadurch gekennzeichnet, daß das Alkalihydroxid in einer Konzentration bis zu etwa 25 Gew.-%, vorzugsweise von etwa 5 bis 20 Gew.-% zugegen ist.

**Claims**

1. A process for removing cyanogen halides and/or phosgene from waste gases by washing with aqueous solutions of bases, wherein the waste gas containing the cyanogen halide and/or phosgene is brought into intimate contact with a wash liquid which contains as active component an amine of the formula NR₃ in which one of the radicals R represents an alkanol group having 2 or 3 carbon atoms and the remaining R groups are alkyl having 1 to 4 carbon atoms.

2. The process as claimed in claim 1, wherein the alkyl radicals R contain 1 to 2 carbon atoms.

3. The process as claimed in claim 1 or 2, wherein the hydroxyl group in the alkanol group is terminal.

4. The process as claimed in one or more of claims 1 to 3, wherein the washing is carried out at a temperature of about 0 to 80, preferably about 5 to 40°C.

5. The process as claimed in one or more of claims 1 to 4, wherein the gas and the wash liquid are passed in countercurrent to one another.

6. The process as claimed in one or more of claims 1 to 5, wherein the amine is contained in the wash liquid in a concentration of about 2 to 20, preferably about 5 to 15%.

7. The process as claimed in one or more of claims 1 to 6, wherein the wash liquid additionally contains an alkali metal hydroxide, in particular sodium hydroxide.

8. The process as claimed in claim 7, wherein the alkali metal hydroxide is present in a concentration up to about 25% by weight, preferably about 5 to 20% by weight.

**Revendications**

1. Procédé pour l'élimination d'halogénures de cyanogène et/ou de phosgène des gaz rejetés, par lavage avec des solutions aqueuses de bases, caractérisé en ce que l'on met en contact intime le gaz rejeté, contenant du phosgène et/ou un halogénure de cyanogène, avec un liquide de lavage qui contient en tant que composant actif une amine de formule NR₃, dans laquelle l'un des restes R représente un groupe alcanol ayant 2 ou 3 atomes de carbone, et les autres groupes R sont des groupes alkyle ayant de 1 à 4 atomes de carbone.

2. Procédé selon la revendication 1, caractérisé en ce que les radicaux alkyle R contiennent 1 ou 2 atomes de carbone.

3. Procédé selon la revendication 1 ou 2, caractérisé en ce que, dans le radical alcanol, le groupe hydroxy est en position terminale.

4. Procédé selon une ou plusieurs des revendications 1 à 3, caractérisé en ce que le lavage est effectué à une température d'environ 0 à 80, de préférence d'environ 5 à 40°C.

5. Procédé selon une ou plusieurs des revendications 1 à 4, caractérisé en ce que le gaz et le liquide de lavage sont envoyés à contre-courant l'un par rapport à l'autre.

6. Procédé selon une ou plusieurs des revendications 1 à 5, caractérisé en ce que l'amine est présente dans le liquide de lavage à une concentration d'environ 2 à 20, de préférence d'environ 5 à 15%.

7. Procédé selon une ou plusieurs des revendications 1 à 6, caractérisé en ce que le liquide de lavage contient en outre un hydroxyde alcalin, en particulier de l'hydroxyde de sodium.

8. Procédé selon la revendication 7, caractérisé en ce que l'hydroxyde alcalin est présent à une concentration allant jusqu'à environ 25% en poids, de préférence d'environ 5 à 20% en poids.